(19) **Europäisches Patentamt / European Patent Office / Office européen des brevets**

(11) **EP 3 733 389 A1**

(12) # EUROPÄISCHE PATENTANMELDUNG

(43) Veröffentlichungstag:
**04.11.2020 Patentblatt 2020/45**

(51) Int Cl.:
***B29C 70/52*** *(2006.01)*

(21) Anmeldenummer: **19171509.3**

(22) Anmeldetag: **29.04.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **VERFAHREN ZUR HERSTELLUNG VON FASERVERSTÄRKTEN KUNSTSTOFFEN**

(57) Die vorliegende Erfindung betrifft ein Pultrusionsverfahren zur Herstellung von faserverstärkten Kunststoffen, dessen Durchführung durch computergestützte Simulationen und ein geeignetes zugrundeliegendes thermodynamisches Modell verbessert wird.

**Beschreibung**

Die vorliegende Erfindung betrifft ein Pultrusionsverfahren zur Herstellung von faserverstärkten Kunststoffen, dessen Durchführung durch computergestützte Simulationen und ein geeignetes zugrundeliegendes thermodynamisches Modell verbessert wird.

Die Produktivität spielt im Pultrusionsprozess eine herausragende Rolle im Hinblick auf die Wirtschaftlichkeit des Verfahrens. Durch eine Steigerung der Produktionsgeschwindigkeit kann ein höherer Ausstoß je Zeiteinheit erreicht werden, sodass die Produktionskosten sinken. Für eine Optimierung des Prozesses ist es daher unerlässlich zu verstehen, wie die Produktionsgeschwindigkeit gesteigert werden kann und dafür entsprechende Maßnahmen in Bezug auf die Chemie, die Technologie oder den Prozess zu identifizieren und umzusetzen.

Im Pultrusionsprozess werden kontinuierlich faserverstärkte Profile mit einer duroplastischen Matrix hergestellt. Dazu werden unidirektionale Faserstränge, sogenannte Rovings, und teilweise zusätzliche Verstärkungstextilien, wie Wirrfasermatten oder Gewebe, aus Glas-, Kohlenstoff-, Aramid- oder Basaltfasern von Rollen abgezogen und zunächst durch eine Injektionsbox oder ein Harzbad gezogen, in der die Fasern mit einem unreagierten, flüssigen Reaktionsgemisch getränkt werden. Der getränkte Faserstrang wird im Anschluss durch ein beheiztes Werkzeug gezogen, in dem unter Formzwang die Aushärtung des Reaktionsgemischs stattfindet. Die kontinuierliche Bewegung des Faserstrangs bzw. des Profils wird durch einen Abzug gewährleistet.

Das Pultrusionswerkzeug besitzt üblicherweise auf der gesamten Länge denselben formgebenden Querschnitt, ist typischerweise ca. 1 m lang und besitzt in Pultrusionsrichtung 3 bis 6 Heizzonen, bei denen die Temperatur einzeln eingestellt werden kann. Die Heizzonen bestehen zum Beispiel aus plattenförmigen elektrischen Widerstandsheizelementen, die oben und unten und wenn nötig auch seitlich an das Werkzeug gepresst werden. Von den Heizplatten wird ein Wärmestrom ins Werkzeug und von dort wiederum in den bewegten und getränkten Faserstrang übertragen. Die erhöhte Temperatur im Faserstrang beschleunigt die chemische Reaktion des Matrixharzes. Das Ziel ist es, am Ende des Pultrusionswerkzeugs einen ausreichend hohen Aushärtegrad zu erreichen, damit das Profil stabil ist. Mit steigender Produktionsgeschwindigkeit sinkt allerdings die Verweilzeit des Faserstrangs im beheizten Werkzeug, sodass weniger Zeit für die Reaktion zur Verfügung steht und tendenziell geringere Aushärtegrade am Ende des Werkzeugs erreicht werden. In Abhängigkeit der Produktionsgeschwindigkeit werden daher die Temperaturen der Heizplatten angepasst (je schneller desto wärmer), um die kürzere Verweilzeit auszugleichen. Aufgrund der vergleichsweise geringen Wärmeleitung innerhalb des Faserstrangs sowie des großen Anteils an Verstärkungsfasern, die ebenfalls aufgeheizt werden müssen, sind die Temperaturen und damit auch der Grad der Aushärtung im Querschnitt des Faserstrangs bzw. Kunststoffprofils lokal jedoch unterschiedlich. Dies macht sich insbesondere bei dickwandigen Profilen bemerkbar. Je ungleichmäßiger das Temperatur- und Reaktionsumsatzprofil im Faserstrang ist, desto größer ist die Wahrscheinlichkeit, dass Bauteildefekte wie Verzug oder Risse auftreten. Dieser Effekt wird durch noch höhere äußere Werkzeugtemperaturen noch verstärkt. Zudem dürfen bestimmte Temperaturen in der Matrix nicht überschritten werden, um sie nicht zu zersetzen. Darüber hinaus ist für die Stabilität des Prozesses, z.B. in Bezug auf die Höhe der Abzugskraft, die Länge sowie Lage der sogenannten Gelzone wichtig. Diese beiden Kriterien werden ebenfalls von den Pultrusionsgeschwindigkeiten sowie den Werkzeugtemperaturen beeinflusst. Es gibt also einen Zielkonflikt zwischen Produktionsgeschwindigkeit einerseits und Produkt- bzw. Prozessqualität andererseits.

Diesem Zielkonflikt wird üblicherweise begegnet, indem in einem iterativen Prozess in Produktionsversuchen solange Pultrusionsgeschwindigkeit und Werkzeugtemperaturen geändert werden, bis ein zufriedenstellender Prozesspunkt gefunden ist. Diese Vorgehensweise ist mit erheblichem Zeit- und Materialaufwand verbunden und muss für jedes neue chemische System, jede Profilgeometrie und jede Werkzeugkonfiguration erneut durchgeführt werden. Zudem ist es schwierig, eine obere Grenze für die Pultrusionsgeschwindigkeit in Abhängigkeit der geforderten Bauteilqualität zu finden. Außerdem zeigen sich einige Bauteildefekte erst einige Zeit nach der Produktion, sodass es zu erhöhtem Ausschuss kommen kann.

Es wäre daher wünschenswert, eine Methode zu entwickeln, die eine Identifizierung der optimalen Werkzeugtemperaturen im Hinblick auf eine möglichst hohe Produktionsgeschwindigkeit bei ausreichend hoher Bauteilqualität ohne die oben genannten Nachteile ermöglicht.

Aufgabe war es, ein Pultrusionsverfahren zur Verfügung zu stellen, mit dem auf einfache Weise eine möglichst hohe Produktionsgeschwindigkeit unter gleichzeitiger Beibehaltung der guten Qualität des hergestellten Produktes erzielt werden kann.

Diese Aufgabe konnte überraschenderweise durch ein simulationsgestütztes Verfahren gelöst werden, bei dem auf Basis einer Modellierung des Reaktionsverlaufs des Kunststoffreaktivsystems in Abhängigkeit von Zeit und Temperatur der Pultrusionsprozess, insbesondere die Wärmeleitungsvorgänge im Werkzeug sowie die resultierenden Temperatur- und Reaktionszustände für beliebige Positionen im Faserstrang, simuliert wird. Mittels der erfindungsgemäß verwendeten Simulation kann für beliebige Kombinationen aus Produktionsgeschwindigkeiten und Werkzeugtemperaturen vorhergesagt werden, ob die geforderte Bauteilqualität, Mindestumsatz, Maximaltemperatur sowie zulässige Temperatur- und Umsatzdifferenzen im Profil erhalten werden. Ausserdem kann so auch die thermische Auslegung des

EP 3 733 389 A1

Werkzeugs mit unterschiedlichen Heizplatten und eventuell nötiger Kerne im Werkzeug, um Hohlkammern in einem Profil auszubilden, überprüft und optimiert werden. Der vorgenannte iterative Prozess kann mittels Computersimulation bereits in der Konstruktionsphase eines Werkzeugs durchgeführt werden. Durch moderne Optimierungssoftware, zum Beispiel auf Basis von selbstlernenden Algorithmen, konnte so eine optimale Lösung und die höchstmögliche Produktionsgeschwindigkeit für eine gegebene Profil-Werkzeug-Konfiguration überraschenderweise gefunden werden. Die mit dem erfindungsgemäßen Verfahren ermittelte Lösung konnte unkompliziert auf die spätere Produktion übertragen werden. Außerdem ist es mit dem nachfolgend beschriebenen simulationsgestützten Verfahren möglich, vorab die Höhe der voraussichtlichen Produktionsgeschwindigkeit virtuell abzusichern, was eine bessere Kostenabschätzung für das pultrudierte Profil ermöglicht.

Gegenstand der Erfindung ist ein Pultrusionsverfahren zur Herstellung von faserverstärkten Kunststoffprofilen auf Basis von Endlos-Fasern, von Endlos-Faserbündeln (Rovings) oder von textilen Halbzeugen und einer flüssigen Reaktionsharzmischung (Kunststoffreaktivsystem), umfassend die Schritte

i) Endlos-Fasern, Endlos-Faserbündel oder textile Halbzeuge durch eine Injektionsbox oder durch ein Harzbad ziehen,

ii) in die Injektionsbox oder das Harzbad die flüssige Reaktionsharzmischung zur Tränkung der Endlos-Fasern, der Endlos-Faserbündel oder der textilen Halbzeuge geben,

iii) die getränkten Endlos-Fasern, Endlos-Faserbündel oder textilen Halbzeuge aus der Injektionsbox oder dem Harzbad in eine Kammer eines temperierbaren Werkzeugs zum Aushärten der Reaktionsharzmischung unter Ausbildung des faserverstärkten Profils ziehen,

iv) das faserverstärkte Profil aus der Kammer abziehen,
dadurch gekennzeichnet, dass

a) in mindestens einem Vorversuch die Komponenten der Reaktionsharzmischung bei einer Starttemperatur $T_0$ zum Zeitpunkt $t_0$ gemischt werden und zu mindestens zwei weiteren Zeitpunkten $t_1$ und $t_2$ die entsprechenden Temperaturen $T_1$ und $T_2$ sowie der Reaktionsumsatz $r_1$ und $r_2$ während der Reaktion der Komponenten in der Reaktionsharzmischung bestimmt werden,

b) die unter a) bestimmten Messwerte zur Ermittlung der Parameter eines vorgegebenen thermodynamischen Rechenmodells, das die zeitliche Entwicklung von Temperatur und Reaktionsumsatz für beliebige Startbedingungen für die verwendete Reaktionsharzmischung beschreibt, genutzt werden,

c) mit den unter b) ermittelten Parametern und dem thermodynamischen Rechenmodell und den Geometrie-Daten des Kunststoffprofils sowie des Pultrusionswerkzeugs in einer Simulationssoftware (z.B. ABAQUS) der in Schritt iii) beschriebene Härtungsprozess simuliert wird,

d) mit der unter c) durchgeführten Simulation in einem iterativen Verfahren optimierte Werkzeugtemperaturen am Eingang der Kammer und in weiteren Abschnitten der Kammer bestimmt werden, die die größtmögliche Geschwindigkeit unter Einhaltung vorgegebener Qualitätsmerkmale ermöglichen,

e) die Pultrusion unter Verwendung der optimierten Werkzeugtemperaturen in der Kammer durchgeführt wird.

Vorgegebene Qualitätsmerkmale sind bevorzugt

- Mindestumsatz $r_{min}$, der am Ende der Kammer im Kunststoffprofil erreicht werden soll, und/oder

- Mittlerer Umsatz $r_{mittel}$, der am Ende der Kammer im Durchschnitt im Kunststoffprofil vorliegen soll, und/oder

- Maximale Temperatur $T_{max}$, die im Kunststoffprofil an keiner Stelle in der Kammer überschritten werden soll, und/oder

- Maximale Temperaturdifferenz $\Delta T_{max}$, die am Ende der Kammer im Kunststoffprofil nicht überschritten werden darf, und/oder

- Maximale Umsatzdifferenz $\Delta r_{max}$, die am Ende der Kammer im Kunststoffprofil nicht überschritten werden darf,

3

und/oder

- Länge der Gelzone im Werkzeug $L_{gel}$, die nicht überschritten werden soll, und/oder

- Lage der Gelzone $x_{gel}$ im Werkzeug, die in einer bestimmten Region liegen soll.

Die einzelnen Schritte des erfindungsgemäßen Verfahrens werden im Folgenden im Detail beschrieben.

Zunächst muss das exotherme Reaktionsverhalten des verwendeten Kunststoffreaktivsystems (Reaktionsharzmischung) beschrieben werden. Auf Basis von bekannten Ansätzen zur Beschreibung von Reaktivsystemen wurde ein semi-empirischer Ansatz auf Basis der folgenden Differentialgleichungen entwickelt, der das exotherme Kunststoffreaktivsystem beschreibt:

$$(1) \qquad dr/dt = k_{tot} \cdot (1-r)^n$$

$$(2) \qquad 1/k_{tot} = 1/k_{kin} + 1/k_{diff}$$

$$(3) \qquad k_{kin} = k_0 \cdot \exp[-E_a/RT] + k_{auto,0} \cdot \exp[-E_{auto}/RT] \cdot r^m$$

$$(4) \qquad k_{diff} = k_{diff,0} \cdot \exp[-E_{diff}/RT] \cdot (x_{diff} + (1-x_{diff})/(1+(\exp[r-r_{infl}])^p))$$

$$(5) \qquad dT/dt = \Delta T_{ad} \cdot dr/dt$$

Hierbei bedeuten

r Reaktionsumsatz
(wird in Schritt a) gemessen und/oder berechnet und in Schritt b) für die Parameterermittlung im thermodynamischem Modell benutzt und in Schritt c) simuliert)

t Zeit
(wird in Schritt a) gemessen und in Schritt c) vorgegeben)

$k_{tot}$ Gesamtgeschwindigkeitskonstante
(wird in Schritt b) und c) gemäß Gleichung (2) berechnet)

n Reaktionsordnung
(in Schritt b) berechneter Parameter)

$k_{kin}$ Kinetische Geschwindigkeitskonstante
(wird jeweils in Schritten b) und c) gemäß Gleichung (3) berechnet)

$k_{diff}$ Diffusive Geschwindigkeitskonstante
(wird jeweils in Schritten b) und c) gemäß Gleichung (4) berechnet)

$k_0$ Kinetischer Vorfaktor
(in Schritt b) berechneter Parameter)

$E_a$ Kinetische Aktivierungsenergie
(in Schritt b) berechneter Parameter)

R Allgemeine Gaskonstante

T Temperatur der Reaktionsharzmischung

(wird in Schritt a) gemessen und in Schritt c) berechnet)

$k_{auto,0}$ Autokatalytischer Vorfaktor
(in Schritt b) berechneter Parameter)

$E_{auto}$ Autokatalytische Aktivierungsenergie
(in Schritt b) berechneter Parameter)

m Autokatalytischer Exponent
(in Schritt b) berechneter Parameter)

$k_{diff,0}$ Diffusiver Vorfaktor
(in Schritt b) berechneter Parameter)

$E_{diff}$ Diffusive Aktivierungsenergie
(in Schritt b) berechneter Parameter)

$x_{diff}$ Wert zur Reduzierung der diffusiven Geschwindigkeitskonstante
(in Schritt b) berechneter Parameter)

$r_{infl}$ Gelumsatz
(in Schritt b) berechneter Parameter)

p Diffusiver Exponent
(in Schritt b) berechneter Parameter)

$\Delta T_{ad}$ Adiabate Temperaturerhöhung
(bevorzugt in Schritt a) gemessen).

Als alternatives thermodynamisches Rechenmodell können auch die folgenden gekoppelten Differentialgleichungen eingesetzt werden:

$$(1) \qquad dr/dt = k_{tot} \cdot (1-r)^n$$

$$(2) \qquad 1/k_{tot} = 1/k_{kin} + 1/k_{diff}$$

$$(3) \qquad k_{kin} = k_B T/h \cdot \exp[-\Delta H_{kin}/RT + \Delta S_{kin}/R] + k_B T/h \cdot \exp[-\Delta H_{auto}/RT + \Delta S_{auto}/R] \cdot r^m$$

$$(4) \qquad k_{diff} = k_B T/h \cdot \exp[-\Delta H_{diff}/RT + \Delta S_{diff}/R] \cdot (x_{diff} + (1-x_{diff})/(1+(\exp[r-r_{infl}])^p))$$

$$(5) \qquad dT/dt = \Delta T_{ad} \cdot dr/dt \, ,$$

wobei

r Reaktionsumsatz
(wird in Schritt a) gemessen und/oder berechnet und in Schritt b) für die Parameterermittlung im thermodynamischem Modell benutzt und in Schritt c) simuliert)

t Zeit
(wird in Schritt a) gemessen und in Schritt c) vorgegeben)

$k_{tot}$ Gesamtgeschwindigkeitskonstante

(wird in Schritt b) und c) gemäß Gleichung (2) berechnet)

n Reaktionsordnung
(in Schritt b) berechneter Parameter)

$k_{kin}$ Kinetische Geschwindigkeitskonstante
(wird jeweils in Schritten b) und c) gemäß Gleichung (3) berechnet)

$k_{diff}$ Diffusive Geschwindigkeitskonstante
(wird jeweils in Schritten b) und c) gemäß Gleichung (4) berechnet)

$k_B$ Boltzmann-Konstante

h Planck-Konstante

$\Delta H_{kin}$ Kinetische Aktivierungsenthalpie
(in Schritt b) berechneter Parameter)

$\Delta S_{kin}$ Kinetische Aktivierungsentropie
(in Schritt b) berechneter Parameter)

R Allgemeine Gaskonstante

T Temperatur der Reaktionsharzmischung
(wird in Schritt a) gemessen und in Schritt c) berechnet)

$\Delta H_{auto}$ Autokatalytische Aktivierungsenthalpie
(in Schritt b) berechneter Parameter)

$\Delta S_{auto}$ Autokatalytische Aktivierungsentropie
(in Schritt b) berechneter Parameter)

m Autokatalytischer Exponent
(in Schritt b) berechneter Parameter)

$\Delta H_{diff}$ Diffusive Aktivierungsenthalpie
(in Schritt b) berechneter Parameter)

$\Delta S_{diff}$ Diffusive Aktivierungsentropie
(in Schritt b) berechneter Parameter)

$x_{diff}$ Wert zur Reduzierung der diffusiven Geschwindigkeitskonstante
(in Schritt b) berechneter Parameter)

$r_{infl}$ Gelumsatz
(in Schritt b) berechneter Parameter)

p Diffusiver Exponent
(in Schritt b) berechneter Parameter)

$\Delta T_{ad}$ Adiabate Temperaturerhöhung
(bevorzugt in Schritt a) gemessen)

bedeuten.

Die Wertebereiche für die zu berechnenden Parameter müssen vor der Ausführung von Schritt b) auf physikalisch sinnvolle Werte eingegrenzt werden. Diese Wertebereiche können der allgemein zugänglichen Literatur entnommen werden. Werte aus den vorgenannten Wertebereichen werden in den Differentialgleichungen eingesetzt und die so berechneten Reaktionsumsätze und Temperaturen mit den in Schritt a) gemessenen Werten verglichen und solange iteriert, bis die berechneten Reaktionsumsätze und Temperaturen mit den gemessenen Reaktionsumsätzen und Temperaturen bestmöglich übereinstimmen. Dadurch werden die Differentialgleichungen an die in Schritt a) gemessenen Daten angepasst.

Die meisten der oben genannten Parameter lassen sich in bestimmten Grenzen variieren, um das zunächst allgemeine Modell an ein z.B. spezifisches Kunststoffreaktivsystem anzupassen. Dies erfolgt mithilfe von mehrfachen Temperatur- und Umsatzmessungen während der Reaktion des zu beschreibenden Kunststoffreaktivsystems in Vorversuchen mit verschiedenen Starttemperaturen (zum Beispiel 30°C, 40°C, 50°C, 60°C, 70°C, 80°C). Über eine Variation der Parameter des Modells werden diejenigen Werte identifiziert, die die gemessenen Temperatur- und Umsatzverläufe am besten beschreiben. Da es eine fast unendliche große Anzahl an möglichen Kombinationen für die Parameterwerte gibt, kann die Bestimmung der optimalen Lösung zum Beispiel mithilfe des sog. Excel-Solvers in Microsoft Excel erfolgen. Der Excel-Solver ermöglicht es, durch multiple Startwerte und ein angeschlossenes Gradientenverfahren eine Kombination von Parameterwerten zu finden, die die Abweichung zwischen Modell und Messungen im Sinne der Fehlerquadratsumme minimieren. Die Messung der Temperatur- und Umsatzverläufe für verschiedene Starttemperaturen (sowohl Material- als auch Umgebungstemperatur) erfolgt in näherungsweise adiabaten Vorversuchen. Dafür wird das Reaktionsgemisch zusammengeführt und gemischt, in ein thermisch isoliertes Gefäß gefüllt und in der Mitte des Gefäßes die Temperatur während der Reaktion gemessen. Mithilfe von punktuellen Messungen zu verschiedenen Zeitpunkten kann bevorzugt die Änderung des Reaktionsumsatzes während der Reaktion (z.B. bei einem Polyurethanreaktivsystem durch IR-Messungen zur Bestimmung des NCO-Gehaltes) zur Kontrolle verfolgt werden. Alternativ kann der Umsatz zum Beispiel aus der Temperaturerhöhung $\Delta T_{ad}$ gemäß Gleichung (5) bestimmt werden.

Sind die Parameter des Modells für ein chemisches System bestimmt, beschreibt es den Reaktionsfortschritt des reinen Reaktivsystems für beliebige Temperaturverläufe unter adiabaten Bedingungen. Der reale Pultrusionsprozess ist allerdings um ein vielfaches komplexer. Das Kunststoffreaktivsystem wird mit Verstärkungsfasern gemischt und durch ein beheiztes Werkzeug mit verschiedenen Temperaturzonen gezogen, wodurch sich die Randbedingungen permanent ändern und ein Wärmeübergang von/zum Werkzeug stattfindet.

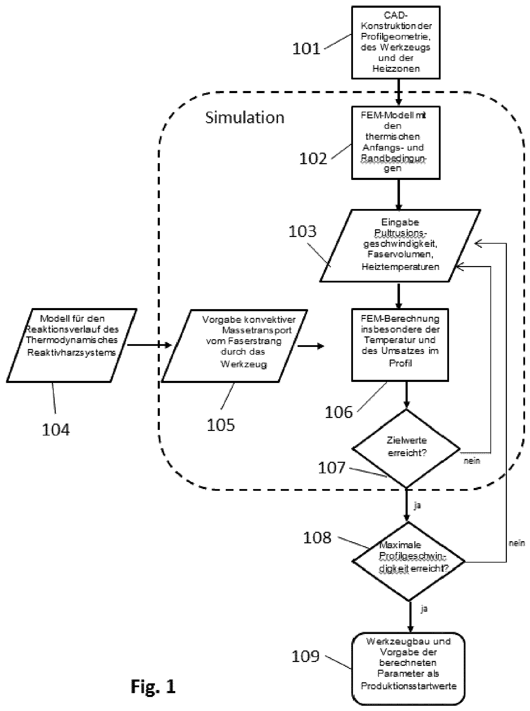

Um diesen komplexen Prozess zu beschreiben wird die in der Technik weit verbreitete Finite-Elemente-Methode (FEM) als Simulationsmodell verwendet. Der prinzipielle Ablauf der Simulation wird anhand der nachfolgenden Figur 1 beispielhaft näher erläutert. Fig. 1 zeigt die erfindungsgemäße Durchführung der FEM-Berechnung als Flussdiagramm.

Im Schritt 101 wird auf Basis der Geometrie des Pultrusionsprofils das dafür benötigte Werkzeug mit den unterschiedlichen Heizplatten und eventuell eingesetzter Kerne, um Hohlkammern in dem Profil auszubilden, in einer CAD-Software (computer-aided design) konstruiert.

Aus den CAD-Daten wird im Schritt 102 nach dem üblichen Stand der Technik ein FEM-Netz generiert. Für die thermische Berechnung werden die Materialdaten (z.B. Wärmekapazität, Wärmeleitfähigkeit, Dichte) vom Werkzeug, von den Heizplatten und der eventuell vorhandenen Kerne festgelegt. Zusätzlich werden für alle Flächen, die Wärme austauschen, die entsprechenden Randbedingungen (z.B. Temperaturen, Wärmeströme, Wärmeübergangskoeffizienten) definiert. Selbstverständlich muss auch der wechselseitige Wärmeaustausch der Komponenten untereinander, beispielsweise zwischen den Heizplatten und dem Werkzeug und zwischen dem Werkzeug und dem Pultrusionsprofil berücksichtigt werden.

Im Schritt 103 erfolgt die Vorgabe der Anfangsbedingungen wie z.B. die Temperaturen oder Heizleistungen der verschiedenen Heizplatten, vom Werkzeug und der Pultrusionsgeschwindigkeit.

Wie unter Schritt iii) beschrieben, wird das Halbzeug aus der Injektionsbox oder dem Harzbad in eine Kammer des temperierbaren Werkzeugs zum Aushärten der Reaktionsharzmischung unter Ausbildung des faserverstärkten Profils gezogen. Der Stofftransport des faserverstärkten Profils durch die Kammer des Werkzeugs wird daher im Schritt 105 als konvektiver Massetransport durch das feststehende Werkzeug simuliert. Die Geschwindigkeit des Massetransports ist mit der Vorgabe der Pultrusionsgeschwindigkeit im Schritt 103 festgelegt.

Von den Heizplatten wird ein Wärmestrom ins Werkzeug und von dort wiederum in den bewegten und getränkten Faserstrang übertragen. Die erhöhte Temperatur im Faserstrang beschleunigt die chemische Reaktion des Matrixharzes, wobei die Reaktion wiederum auf Grund der Exothermie Wärme freisetzt und zu einem weiteren Temperaturanstieg im Faserstrang führt. Zur mathematischen Beschreibung wird daher im Schritt 104 ein thermodynamisches Modell für den Reaktionsverlauf des Kunststoffreaktivsystems benötigt. Der in den Gleichungen (1) bis (5) gezeigte semi-empirische Ansatz erwies sich als besonders vorteilhaft. Er wird im Schritt 105 in einer kommerziellen FEM-Software wie z.B. Abaqus integriert. In Abaqus können die Gleichungen in sogenannten "User Subroutines" unter Berücksichtigung des konvektiven Massetransports des Faserstrangs modelliert werden, wobei diese nur die chemische Reaktion der Kunststoff-Matrix beschreiben. Die Fasern nehmen nicht selbst an der Reaktion teil, sie nehmen aber entsprechend ihrem Volumenanteil am gesamten Faser-Matrix-Volumen entsprechend ihrer Dichte, Wärmekapazität und Wärmeleitfähigkeit Wärme auf.

Im Schritt 106 erfolgt die eigentliche FEM-Berechnung vom Wärmeaustauch der beteiligten Komponenten (Heizplatten, Werkzeug, eventuell eingesetzter Kerne und Faserstrang) mit den bekannten physikalischen Gesetzen zur Beschreibung von Wärmetransport- und Aufheizvorgängen unter der besonderen Berücksichtigung der in Schritt 105 definierten Bewegung des Faserstrangs durch das Werkzeug.

Nach der Simulation liegen sowohl der Verlauf von Reaktionsumsatz r und Temperatur T für einen bestimmten Punkt im Faserstrang (z. B. Profilmittelpunkt, Profileckpunkt) entlang des Werkzeugs als auch deren Verteilung im Querschnitt des Profils für eine bestimmte Position in Pultrusionsrichtung vor. Es ist insbesondere zu beachten, dass an einer bestimmten Position in Produktionsrichtung (zum Beispiel 0,5 m nach Eintritt des Faserstrangs in die Kammer) nicht im gesamten Profilquerschnitt derselbe Reaktionsumsatz sowie dieselbe Temperatur vorliegen, sondern dass beispielsweise am Rand des Profils eine höhere Temperatur und ein höherer Reaktionsumsatz vorliegen kann als in der Profilmitte oder umgekehrt.

Aus den berechneten Werten für Temperatur und Reaktionsumsatz im Faserstrang/Kunststoffprofil lassen sich die unten definierten Qualitätsmerkmale bestimmen, anhand derer die Güte des Prozesses sowie des hergestellten Profils beurteilt und verglichen werden können. Neben den Werten für den Reaktionsumsatz sowie der Temperatur an einer bestimmten Position in Pultrusionsrichtung ist auch die Länge und Lage der sogenannten Gelzone von Bedeutung. Bei Erreichen des Gelumsatzes $r_{infl}$ geht ein Reaktivgemisch vom flüssigen in den festen Zustand über. Die Gelzone ist derjenige Bereich im Pultrusionswerkzeug, in dem das Reaktionsgemisch den Gelumsatz erreicht. Da der Gelumsatz an verschiedenen Stellen im Profilquerschnitt an unterschiedlichen Positionen entlang der Länge des Pultrusionswerkzeugs erreicht wird, ist die Gelzone eine dreidimensionale, in die Länge gezogene Fläche. Die Länge der Gelzone gibt an, wie weit diese Fläche in Pultrusionsrichtung gestreckt ist. Die Lage der Gelzone gibt an, wo diese Fläche im Pultrusionswerkzeug liegt.

Das Simulationsmodell mit dem zugrundeliegenden Materialmodell kann wie oben beschrieben zur Optimierung der Prozessparameter verwendet werden. Für die Optimierung werden Qualitätsmerkmale definiert, von denen mindestens ein oder mehrere Merkmale erreicht werden sollen. Diese können beispielsweise sein:

- Mindestumsatz $r_{min}$, der am Ende der Kammer in allen Punkten des Querschnitts im Kunststoffprofil mindestens erreicht werden soll;

- Mittlerer Umsatz $r_{mittel}$, der im Durchschnitt am Ende der Kammer im Kunststoffprofil vorliegen soll. Der mittlere Umsatz entspricht dem Mittelwert aller Werte des Reaktionsumsatzes im Querschnitt des Kunststoffprofils;

- Maximale Umsatzdifferenz $\Delta r_{max}$, die am Ende der Kammer im Kunststoffprofil nicht überschritten werden darf. Die Umsatzdifferenz bezeichnet die Differenz zwischen dem größten und dem kleinsten Wert des Umsatzes im Profilquerschnitt;

- Maximale Temperatur $T_{max}$, die an keiner Stelle in der Kammer überschritten werden soll;

- Maximale Temperaturdifferenz $\Delta T_{max}$, die am Ende der Kammer im Kunststoffprofil nicht überschritten werden darf. Die Temperaturdifferenz bezeichnet die Differenz zwischen dem größten und dem kleinsten Wert der Temperatur im Profilquerschnitt;

- Länge der Gelzone im Werkzeug $L_{gel}$, die nicht überschritten werden soll. Die Länge der Gelzone gibt an, wie weit die dreidimensionale Fläche, in der jeder Punkt im Profilquerschnitt den Gelumsatz erreicht, in Pultrusionsrichtung gestreckt ist; und/oder

- Lage der Gelzone $x_{gel}$ im Werkzeug, die in einer bestimmten Region liegen soll.

Die Lage der Gelzone gibt an, wo die dreidimensionale Fläche, in der jeder Punkt im Profilquerschnitt den Gelumsatz erreicht, im Pultrusionswerkzeug ist.

Für einzelne oder alle Qualitätsmerkmale lassen sich je nach Kunststoffreaktivsystem Zahlenwerte vorgeben, die erfahrungsgemäß zu der geforderten Bauteilqualität bzw. Prozessstabilität führen. Diese Werte bilden die Zielwerte für die Simulation bzw. Optimierung.

Im Schritt 107 erfolgt ein Abgleich, inwieweit das unter Schritt 106 vorliegende Ergebnis die Zielwerte erfüllt. Wenn die Zielwerte nicht erreicht werden, wird die Berechnung ab Schritt 103 mit geänderten Vorgaben insbesondere der Temperaturen der Heizplatten erneut durchgeführt.

Wenn keine berechnete Temperaturvariante zielführend ist, wird die zuletzt erfolgreiche Pultrusionsgeschwindigkeit mit der zugehörigen Temperaturverteilung entlang der Heizzonen von Schritt 108 an Schritt 109 weitergegeben, um diese Werte für den Start der Produktion zu nutzen.

Wenn es im Schritt 107 eine Temperaturkombination gibt, die die Zielwerte erfüllt, wird in Schritt 108 die Pultrusionsgeschwindigkeit erhöht und die Berechnung von Punkt 103 an erneut durchlaufen.

Die beschriebene Optimierung (Simulation gemäß Schritt c) und Iteration gemäß Schritt d)) kann auf mindestens zweierlei Weise erfolgen:

i) Manuell: dazu wird zunächst der Einfluss der Änderung von einzelnen Prozessparametern (beispielsweise Erhöhung der Heizplattentemperatur in Zone 2) sowie der gleichzeitigen Änderung von mehreren Prozessparametern auf das Simulationsergebnis untersucht. Dies kann für verschiedene Produktionsgeschwindigkeiten erfolgen. Anhand eines stetigen Abgleichs zwischen den Simulationsergebnissen und den Zielwerten im Schritt 107 können gezielt diejenigen Parameter identifiziert und geändert werden, die einen positiven Einfluss im Hinblick auf die Zielwerte haben. So wird durch mehrmaliges Iterieren zumindest eine vorteilhafte Lösung zur Maximierung der Produktionsgeschwindigkeit gefunden.

ii) Automatisiert und softwaregestützt: die in i) beschriebene manuelle Iteration und Optimierung kann auch von einer kommerziellen Software (zum Beispiel optiSLang) übernommen werden. Die Software führt selbständig die Schrittfolge "Vorgabe von Prozessparametern (103)" - "Berechnung von Umsatz und Temperatur mit dem Simulationsmodell (106)" - "Abgleich mit den Zielwerten (107) und Erhöhung der Pultrusionsgeschwindigkeit (108) " - "Vorgabe neuer Prozessparameter für die nächste Simulation (103)" durch. Durch beispielsweise einen selbstlernenden Algorithmus ist manche Software in der Lage, die Zusammenhänge zwischen den Prozessparametern und dem Simulationsergebnis selbst herzustellen und so eine optimale Lösung zu finden.

Aus der FEM-Simulation können noch weitere wichtige Erkenntnisse gewonnen werden, z.B. ob die Leistung, Anzahl und Länge der Heizzonen ausreicht. Ebenso kann die benötigte Zeitdauer vom Anfahrzustand zu Produktionsbeginn bis zum Erreichen eines stationären Produktionsbetriebes mit Hilfe einer nicht stationären Berechnung abgeschätzt werden. So kann die Wirksamkeit technischer Maßnahmen, wie z.B. Erhöhung der Heizleistung, Verringerung der Wärmeverluste der Werkzeug- und Heizplattenoberflächen, auf die Verkürzung dieser Anlaufphase beurteilt werden.
Nach den vorgenannten Berechnungen und Simulationen wird der Pultrusionsprozess zur Herstellung von faserverstärkten Kunststoffpultrudaten folgendermaßen durchgeführt:
Endlos-Fasern, Endlos-Faserbündel oder textile Halbzeuge werden durch eine Injektionsbox oder ein Harzbad gezogen. In die Injektionsbox oder das Harzbad wird die flüssige Reaktionsharzmischung zur Tränkung der Endlos-Fasern, der Endlos-Faserbündel oder der textilen Halbzeuge gegeben. Die getränkten Endlos-Fasern, Endlos-Faserbündel oder textilen Halbzeuge werden aus der Injektionsbox oder dem Harzbad in eine Kammer eines temperierbaren Werkzeugs zum Aushärten der Reaktionsharzmischung unter Ausbildung des faserverstärkten Profils gezogen. Dabei werden die Temperaturen über die Länge des Werkzeugs entsprechend den berechneten Temperaturen und die berechnete Abzugsgeschwindigkeit eingestellt. Das faserverstärkte Profil wird aus der Kammer abgezogen und nach Abkühlung auf eine gewünschte Länge geschnitten.
Endlosfasern bedeutet im Sinne dieser Anmeldung dem Fachmann bekannte Fasern wie z.B. anorganische Fasern, organische Fasern, metallische Fasern, Naturfasern, bevorzugt Glasfasern und Kohlenstofffasern, besonders bevorzugt Glasfasern. Dabei wird unter Endlosfaser ein Fasermaterial verstanden, das eine Länge von mindestens mehreren Metern aufweist. Diese werden beispielsweise von Rollen oder Spulen abgewickelt. Dabei können als Fasermaterial Einzelfasern, sogenannte Faserrovings, geflochtene Fasern, Fasermatten, Fasergelege und Fasergewebe eingesetzt werden. Insbesondere bei Faserverbünden wie geflochtenen Fasern, verdrillten Fasern oder Fasergeweben können in den in diesen Faserverbünden enthaltenen Einzelfasern auch kürzere Einzelfasern enthalten sein. Der Faserverbund selbst muss aber als Endlosmaterial vorliegen. In einer bevorzugten Ausführungsform der Erfindung werden die Glasfasern in Form von Faserrovings eingesetzt.
Für die Herstellung der Kunststoffprofile werden vorzugsweise flüssige Reaktionsharzmischungen auf Basis von Polyurethanreaktivmischungen oder Polyisocyanuratmischungen eingesetzt. Derartige Polyurethanreaktivmischungen enthalten vorzugsweise
eine Polyisocyanatkomponente (A)
eine Polyolkomponente (B) aus

b1) Polyolen

b2) gegebenenfalls Kettenverlängerern und/oder Vernetzungsmitteln,

b3) gegebenenfalls Katalysatoren,

b4) gegebenenfalls Hilfs- und/oder Zusatzmittel, und

interne Trennmittel (C).
Polyurethanpultrudate weisen vorzugsweise 40-80 Vol.-% Endlosfasern auf. Das Polyurethanharz hat bevorzugt eine Dichte von >1,05 g/cm$^3$.
Für das Pultrusionsverfahren einsetzbare Polyurethanreaktivmischungen sind aus der Literatur hinlänglich bekannt und ausführlich beschrieben.

Für das Pultrusionsverfahren einsetzbare flüssige Polyisocyanuratmischungen können z.B. organische aliphatische und/oder aromatische Polyisocyanate sein.

Die Erfindung soll anhand des nachfolgenden Beispiels näher erläutert werden.

**Beispiele:**

Es wurde das folgende Polyurethanreaktivsystem verwendet:

100 Gew.-Teile Polyetherpolyolgemisch aus 28,5 Gew.-% mit Glyzerin gestarteter Polyether auf Propylenoxidbasis (OHZ 235 mg KOH/g), 26 Gew.-% mit Glyzerin gestarteter Polyether auf Propylenoxidbasis (OHZ 1050 mg KOH/g), 23,8 Gew.-% mit Glyzerin gestarteter Polyether auf Propylenoxidbasis (OHZ 400 mg KOH/g), 9,8 Gew.-% mit Propylenglycol gestarteter Polyether auf Propylenoxidbasis (OHZ 28 mg KOH/g) und 9,3 Gew.-% mit Propylenglycol gestarteter Polyether auf Propylenoxidbasis (OHZ 515 mg KOH/g) sowie 2 Gew.-% MOLSIV® L - Pulver der Firma UOP (Kalium-Calcium-Natrium-Aluminosilikat vom Zeolit-Typ A) und 0,67 Gew.-% Diisooctyl-2,2'-[(dioctylstannylen)bis(thio)]diacetat als Katalysator (z.B. Formrez UL-29).

135 Gew.-Teile eines Gemisches aus monomerem und polymerem Diphenylmethandiisocyanat (MDI) mit einer Viskosität von ca. 290 mPa*s bei 20 °C, einer Funktionalität von 2,9 und einem NCO-Gehalt von 31,4 %.

4 Gew.-Teile Tech-Lube HB-550-D (internes Trennmittel).

Als Endlosfasern wurden eingesetzt: Unidirektionale Glasfaserrovings mit einer Feinheit von 4800 tex. Der Fasergewichtsgehalt des simulierten Profils betrug 80 %.

Wie oben beschrieben wurde die zeitliche Entwicklung der Temperatur sowie des Reaktionsumsatzes während der chemischen Reaktion des verwendeten Polyurethansystems in Vorversuchen bei den Starttemperaturen 30°C, 40°C, 50°C, 60°C, 70°C und 80°C gemessen. Mithilfe des Excel-Solvers wurden diejenigen Parameter des vorbestimmten, thermodynamischen Modells ermittelt, die die zeitliche Entwicklung der Temperatur im Reaktionsharzgemisch und des Reaktionsumsatzes am besten beschreiben.

Die optimalen Parameter zur Beschreibung des verwendeten Polyurethan-Systems lauten:

| # | Parameter | Einheit | Wert |
|---|-----------|---------|------|
| 1 | $r$ | - | Variable |
| 2 | $t$ | s | Variable |
| 3 | $k_{tot}$ | 1/s | Wird gemäß Gleichung (2) berechnet |
| 4 | $n$ | - | 2 |
| 5 | $k_{kin}$ | 1/s | Wird gemäß Gleichung (3) berechnet |
| 6 | $k_{diff}$ | 1/s | Wird gemäß Gleichung (4) berechnet |
| 7 | $k_0$ | 1/s | 20,28387 |
| 8 | $E_a$ | J/mol | 25000 |
| 9 | $R$ | $(kg*m^2)/(s^2*mol*K)$ | 8,3144598 |
| 10 | $T$ | K | Variable |
| 11 | $k_{auto,0}$ | 1/s | 3,85687 |
| 12 | $E_{auto}$ | J/mol | 8385,2322 |
| 13 | $m$ | - | 2,44892 |
| 14 | $k_{diff,0}$ | 1/s | $3,54*10^{12}$ |
| 15 | $E_{diff}$ | J/mol | 98966,07361 |
| 16 | $X_{diff}$ | - | 0 |
| 17 | $r_{infl}$ | - | 0,86789 |
| 18 | $p$ | - | 100 |
| 19 | $\Delta T_{ad}$ | K | 154,16321 |

Im Anschluss wurde ein Pultrusionswerkzeug inklusive der elektrischen Heizelemente in der Simulationssoftware ABAQUS modelliert. Das Modell enthält die folgenden Details:

- Länge des Pultrusionswerkzeugs: 1000 mm

- Höhe des Pultrusionswerkzeugs: 90 mm

- Breite des Pultrusionswerkzeugs: 220 mm

- Geometrie des mit dem Pultrusionswerkzeug gefertigten Profils: Rechteckprofil mit 115 mm Breite und 3 mm Dicke

- 12 Heizelemente mit je 75 mm Länge, von denen jeweils 6 Stück gegenüberliegend oben und unten gleichmäßig über die Länge des Pultrusionswerkzeugs verteilt waren. Im Produktionsversuch wurden die Temperaturen der auf gleicher Längenposition befindlichen Heizplatten gleich eingestellt, was zu 6 voneinander unabhängigen Heizzonentemperaturen führt.

Mit dem FEM-Simulationsmodell des Pultrusionswerkzeugs, dem ermittelten vorgegebenen, thermodynamischen Modell sowie der Vorgabe der Heizplattentemperaturen, des Faservolumengehalts des hergestellten Profils sowie der Pultrusionsgeschwindigkeit wurden die zeitliche bzw. räumliche Veränderung der Temperatur sowie des Reaktionsumsatzes beim Durchlaufen des Faserstrangs durch das Pultrusionswerkzeug berechnet.
Zur Bewertung des Simulationsmodells wurden die berechneten Verläufe der Temperatur für verschiedene Positionen im Profil sowie zwei verschiedene Pultrusionsgeschwindigkeiten mit Messungen der Temperatur im durchgeführten Prozess verglichen.
Der Vergleich zeigte eine geringe Abweichung zwischen Simulation und Messung, sodass davon ausgegangen werden kann, dass das Simulationsmodell die Wirklichkeit ausreichend genau beschreibt.
Es wurden beispielhaft insgesamt drei Simulationen wie oben beschrieben mit der FEM-Software Abaqus mit unterschiedlichen Prozessparametern durchgeführt. Die Parameter betrugen:

| Simulation | Produktionsgeschwindigkeit | Heizzonentemperaturen | | | | | |
| | | HT1 | HT2 | HT3 | HT4 | HT5 | HT6 |
| | [m/min] | [°C] | [°C] | [°C] | [°C] | [°C] | [°C] |
| #1 | 0,5 | 60 | 140 | 160 | 180 | 180 | 170 |
| #2 | 1,5 | 60 | 140 | 160 | 180 | 180 | 170 |
| #3 | 1,5 | 80 | 160 | 180 | 200 | 190 | 180 |

Der Wert HT1 ist die Temperatur der Heizplatten, die am Anfang des Werkzeugs, wo der Faserstrang in die Kammer des Werkzeugs eintritt, liegen. HT2 ist die Temperatur der in Produktionsrichtung nachfolgenden Heizplatten und so weiter. HT6 ist die Temperatur der Heizplatten am Ende des Werkzeugs, wo der Faserstrang aus der Kammer des Werkzeugs austritt.
In Simulation #2 wurde im Vergleich zu #1 die Produktionsgeschwindigkeit erhöht. In Simulation #3 wurden im Vergleich zu #2 die Heizzonentemperaturen erhöht. Das Ziel war es, eine möglichst hohe Produktionsgeschwindigkeit zu ermöglichen, ohne die vorgegebenen Qualitätsmerkmale negativ zu beeinflussen.
Als Anfangstemperatur für den Faserstrang beim Eintritt in die Kammer des Werkzeugs wurden 25°C und der anfängliche Reaktionsumsatz mit 0 vorgegeben.
Als Zielwerte wurden folgende Werte vorgegeben:

- Mittlerer Umsatz im Austrittsquerschnitt $r_{mittel} > 0,8$

- Maximale Temperatur, die im Profilquerschnitt an keiner Stelle im Werkzeug überschritten werden sollte, $T_{max} < 200°C$

In Simulation #1 wurde bei einer Produktionsgeschwindigkeit von 0,5 m/min ein mittlerer Umsatz im Austrittsquerschnitt von $r_{mittel,1}=0,9$ berechnet. Die maximale Temperatur im Werkzeug $T_{max,1}$ betrug 178,9°C. Somit waren beide Zielwerte erreicht. Steigerte man jedoch bei den gleichen Temperaturen der Heizzonen die Produktionsgeschwindigkeit auf 1,5 m/min (Simulation #2), so wurde nur noch ein mittlerer Umsatz von $r_{mittel,2}=0,76$ erreicht. Dieser Umsatz lag unter dem vorgegebenen Zielwert. Die maximale Temperatur betrug $T_{max,2}$=181,1°C. Um den vorgegebenen Umsatz bei einer Produktionsgeschwindigkeit von 1,5 m/min dennoch zu erreichen, wurden in Simulation #3 die Heizzonentemperaturen erhöht. Dies führte zu einem berechneten Umsatz von $r_{mittel,3}$=0,84 und damit zu einer Erreichung des vorgegebenen Zielwerts. Die Maximaltemperatur betrug $T_{max,3}$=195,7°C und lag damit unterhalb der oberen Grenze von 200 °C. Durch die erfindungsgemäße Vorgehensweise konnten somit optimierte Temperatureinstellungen für dieses Werkzeug identifiziert werden, die eine Steigerung der Produktionsgeschwindigkeit unter Einhaltung der Zielwerte ermöglichten. Die Pultrusion konnte mit den optimierten Werkzeugtemperaturen erfolgreich durchgeführt und ein qualitativ hochwertiges Pultrudat erhalten werden.

**Patentansprüche**

1. Pultrusionsverfahren zur Herstellung von faserverstärkten Kunststoffprofilen auf Basis von Endlos-Fasern, von Endlos-Faserbündeln (Rovings) oder von textilen Halbzeugen und einer flüssigen Reaktionsharzmischung, umfassend die Schritte

   i) Endlos-Fasern, Endlos-Faserbündel oder textile Halbzeuge durch eine Injektionsbox oder ein Harzbad ziehen,
   ii) in die Injektionsbox oder das Harzbad die flüssige Reaktionsharzmischung zur Tränkung der Endlos-Fasern, der Endlos-Faserbündel oder der textilen Halbzeuge geben,
   iii) die getränkten Endlos-Fasern, Endlos-Faserbündel oder textilen Halbzeuge aus der Injektionsbox oder dem Harzbad in eine Kammer eines temperierbaren Werkzeugs zum Aushärten der Reaktionsharzmischung unter Ausbildung des faserverstärkten Profils ziehen,
   iv) das faserverstärkte Profil aus der Kammer abziehen,
   **dadurch gekennzeichnet, dass**

   a) in mindestens einem Vorversuch die Komponenten der Reaktionsharzmischung bei einer Starttemperatur $T_0$ zum Zeitpunkt $t_0$ gemischt werden und zu mindestens zwei weiteren Zeitpunkten $t_1$ und $t_2$ die entsprechenden Temperaturen $T_1$ und $T_2$ sowie der Reaktionsumsatz $r_1$ und $r_2$ während der Reaktion der Komponenten in der Reaktionsharzmischung bestimmt werden,
   b) die unter a) bestimmten Messwerte zur Ermittlung der Parameter eines vorgegebenen thermodynamischen Rechenmodells, das die zeitliche Entwicklung von Temperatur und Reaktionsumsatz für beliebige Startbedingungen für die verwendete Reaktionsharzmischung beschreibt, genutzt werden,
   c) mit den unter b) ermittelten Parametern und dem thermodynamischen Rechenmodell und den Geometrie-Daten des Kunststoffprofils sowie des Pultrusionswerkzeugs in einer Simulationssoftware (z.B. ABAQUS) der in Schritt iii) beschriebene Härtungsprozess simuliert wird,
   d) mit der unter c) durchgeführten Simulation in einem iterativen Verfahren optimierte Werkzeugtemperaturen am Eingang der Kammer und in weiteren Abschnitten der Kammer bestimmt werden, die die größtmögliche Geschwindigkeit unter Einhaltung vorgegebener Qualitätsmerkmale ermöglichen,
   e) die Pultrusion unter Verwendung der optimierten Werkzeugtemperaturen in der Kammer durchgeführt wird.

2. Pultrusionsverfahren gemäß Anspruch 1, **dadurch gekennzeichnet, dass** in Schritt a)

   a1) die Komponenten der Reaktionsharzmischung auf die Temperatur $T_0$ temperiert und bei dieser Temperatur zum Zeitpunkt $t_0$ gemischt werden,
   a2) zu mindestens zwei weiteren Zeiten $t_1$ und $t_2$, vorzugsweise 3 und mehr weiteren Zeiten $t_1$ bis $t_x$, die entsprechenden Temperaturen $T_1$ und $T_2$, vorzugsweise 3 und mehr weitere Temperaturen $T_1$ bis $T_x$, gemessen werden und
   a3) zwei Umsätze $r_1$ und $r_2$, vorzugsweise 3 und mehr Umsätze $r_1$ bis $r_x$, während der Reaktion entweder zu den unter a2) genannten Zeiten oder zu anderen Zeiten gemessen und/oder berechnet werden,

   der Schritt a) mindestens einmal, vorzugsweise 2 bis 5 mal, für von $T_0$ unterschiedliche Anfangstemperaturen durchgeführt wird, um die Messdaten für den Vorversuch zu erhalten.

3. Pultrusionsverfahren gemäß Anspruch 1, **dadurch gekennzeichnet, dass** in Schritt b) als thermodynamisches Rechenmodell die folgenden gekoppelten Differentialgleichungen eingesetzt werden

$$(1) \qquad dr/dt = k_{tot} \cdot (1-r)^n$$

$$(2) \qquad 1/k_{tot} = 1/k_{kin} + 1/k_{diff}$$

$$(3) \qquad k_{kin} = k_0 \cdot \exp[-E_a/RT] + k_{auto,0} \cdot \exp[-E_{auto}/RT] \cdot r^m$$

$$(4) \qquad k_{diff} = k_{diff,0} \cdot \exp[-E_{diff}/RT] \cdot (x_{diff} + (1-x_{diff})/(1+(\exp[r-r_{infl}])^p))$$

$$(5) \qquad dT/dt = \Delta T_{ad} \cdot dr/dt \,,$$

wobei

$r$ Reaktionsumsatz
(wird in Schritt a) gemessen und/oder berechnet und in Schritt b) für die Parameterermittlung im thermodynamischem Modell benutzt und in Schritt c) simuliert)
$t$ Zeit
(wird in Schritt a) gemessen und in Schritt c) vorgegeben)
$k_{tot}$ Gesamtgeschwindigkeitskonstante
(wird in Schritt b) und c) gemäß Gleichung (2) berechnet)
$n$ Reaktionsordnung
(in Schritt b) berechneter Parameter)
$k_{kin}$ Kinetische Geschwindigkeitskonstante
(wird jeweils in Schritten b) und c) gemäß Gleichung (3) berechnet)
$k_{diff}$ Diffusive Geschwindigkeitskonstante
(wird jeweils in Schritten b) und c) gemäß Gleichung (4) berechnet)
$k_0$ Kinetischer Vorfaktor
(in Schritt b) berechneter Parameter)
$E_a$ Kinetische Aktivierungsenergie
(in Schritt b) berechneter Parameter)
$R$ Allgemeine Gaskonstante
$T$ Temperatur der Reaktionsharzmischung
(wird in Schritt a) gemessen und in Schritt c) berechnet)
$k_{auto,0}$ Autokatalytischer Vorfaktor
(in Schritt b) berechneter Parameter)
$E_{auto}$ Autokatalytische Aktivierungsenergie
(in Schritt b) berechneter Parameter)
$m$ Autokatalytischer Exponent
(in Schritt b) berechneter Parameter)
$k_{diff,0}$ Diffusiver Vorfaktor
(in Schritt b) berechneter Parameter)
$E_{diff}$ Diffusive Aktivierungsenergie
(in Schritt b) berechneter Parameter)
$x_{diff}$ Wert zur Reduzierung der diffusiven Geschwindigkeitskonstante
(in Schritt b) berechneter Parameter)
$r_{infl}$ Gelumsatz
(in Schritt b) berechneter Parameter)
$p$ Diffusiver Exponent
(in Schritt b) berechneter Parameter)
$\Delta T_{ad}$ Adiabate Temperaturerhöhung
(bevorzugt in Schritt a) gemessen)

bedeuten,

und die so berechneten Werte mit den in Schritt a) gemessenen Werten verglichen und solange iteriert werden, bis die berechneten Werte mit den gemessenen Werten bestmöglich übereinstimmen.

4. Pultrusionsverfahren gemäß Anspruch 1, **dadurch gekennzeichnet, dass** in Schritt b) als thermodynamisches Rechenmodell die folgenden gekoppelten Differentialgleichungen eingesetzt werden

$$(1) \qquad dr/dt = k_{tot} \cdot (1-r)^n$$

$$(2) \qquad 1/k_{tot} = 1/k_{kin} + 1/k_{diff}$$

$$(3) \qquad k_{kin} = k_B T/h \cdot \exp[-\Delta H_{kin}/RT + \Delta S_{kin}/R] + k_B T/h \cdot \exp[-\Delta H_{auto}/RT + \Delta S_{auto}/R] \cdot r^m$$

$$(4) \qquad k_{diff} = k_B T/h \cdot \exp[-\Delta H_{diff}/RT + \Delta S_{diff}/R] \cdot (x_{diff} + (1-x_{diff})/(1+(\exp[r-r_{infl}])^p))$$

$$(5) \qquad dT/dt = \Delta T_{ad} \cdot dr/dt ,$$

wobei

r Reaktionsumsatz
(wird in Schritt a) gemessen und/oder berechnet und in Schritt b) für die Parameterermittlung im thermodynamischem Modell benutzt und in Schritt c) simuliert)
t Zeit
(wird in Schritt a) gemessen und in Schritt c) vorgegeben)
$k_{tot}$ Gesamtgeschwindigkeitskonstante
(wird in Schritt b) und c) gemäß Gleichung (2) berechnet)
n Reaktionsordnung
(in Schritt b) berechneter Parameter)
$k_{kin}$ Kinetische Geschwindigkeitskonstante
(wird jeweils in Schritten b) und c) gemäß Gleichung (3) berechnet)
$k_{diff}$ Diffusive Geschwindigkeitskonstante
(wird jeweils in Schritten b) und c) gemäß Gleichung (4) berechnet)
$k_B$ Boltzmann-Konstante
h Planck-Konstante
$\Delta H_{kin}$ Kinetische Aktivierungsenthalpie
(in Schritt b) berechneter Parameter)
$\Delta S_{kin}$ Kinetische Aktivierungsentropie
(in Schritt b) berechneter Parameter)
R Allgemeine Gaskonstante
T Temperatur der Reaktionsharzmischung
(wird in Schritt a) gemessen und in Schritt c) berechnet)
$\Delta H_{auto}$ Autokatalytische Aktivierungsenthalpie
(in Schritt b) berechneter Parameter)
$\Delta S_{auto}$ Autokatalytische Aktivierungsentropie
(in Schritt b) berechneter Parameter)
m Autokatalytischer Exponent
(in Schritt b) berechneter Parameter)
$\Delta H_{diff}$ Diffusive Aktivierungsenthalpie
(in Schritt b) berechneter Parameter)
$\Delta S_{diff}$ Diffusive Aktivierungsentropie
(in Schritt b) berechneter Parameter)
$x_{diff}$ Wert zur Reduzierung der diffusiven Geschwindigkeitskonstante
(in Schritt b) berechneter Parameter)

$r_{infl}$ Gelumsatz
(in Schritt b) berechneter Parameter)
p Diffusiver Exponent
(in Schritt b) berechneter Parameter)
$\Delta T_{ad}$ Adiabate Temperaturerhöhung
(bevorzugt in Schritt a) gemessen)

bedeuten,
und die so berechneten Werte mit den in Schritt a) gemessenen Werten verglichen und solange iteriert werden, bis die berechneten Werte mit den gemessenen Werten bestmöglich übereinstimmen.

5. Pultrusionsverfahren gemäß Anspruch 1, **dadurch gekennzeichnet, dass** es sich bei den vorgegebenen Quali- tätsmerkmalen um

- Mindestumsatz $r_{min}$, der am Ende der Kammer im Kunststoffprofil erreicht werden soll, und/oder
- Mittlerer Umsatz $r_{mittel}$, der am Ende der Kammer im Durchschnitt im Kunststoffprofil vorliegen soll, und/oder
- Maximale Temperatur $T_{max}$, die im Kunststoffprofil an keiner Stelle in der Kammer überschritten werden soll, und/oder
- Maximale Temperaturdifferenz $\Delta T_{max}$, die am Ende der Kammer im Kunststoffprofil nicht überschritten werden darf, und/oder
- Maximale Umsatzdifferenz $\Delta r_{max}$, die am Ende der Kammer im Kunststoffprofil nicht überschritten werden darf, und/oder
- Länge der Gelzone im Werkzeug $L_{gel}$, die nicht überschritten werden soll, und/oder
- Lage der Gelzone $x_{gel}$ im Werkzeug, die in einer bestimmten Region liegen soll, handelt.

6. Pultrusionsverfahren gemäß Anspruch 1, **dadurch gekennzeichnet, dass** die flüssige Reaktionsharzmischung eine reaktive Polyurethanmischung basierend auf organischen aliphatischen und/oder aromatischen Polyisocyanaten und Verbindungen mit mindestens zwei gegenüber Isocyanatgruppen reaktiven Gruppen ist.

7. Pultrusionsverfahren gemäß Anspruch 1, **dadurch gekennzeichnet, dass** die flüssige Reaktionsharzmischung eine reaktive Polyisocyanuratmischung basierend auf organischen aliphatischen und/oder aromatischen Polyiso- cyanaten ist.

101 — CAD-
Konstruktion der
Profilgeometrie,
des Werkzeugs
und der
Heizzonen

Simulation

102 — FEM-Modell mit
den
thermischen
Anfangs- und
Randbedingungen

103 — Eingabe
Pultrusionsgeschwindigkeit,
Faservolumen,
Heiztemperaturen

104 — Modell für den
Reaktionsverlauf des
Thermodynamisches
Reaktivharzsystems

105 — Vorgabe konvektiver
Massetransport
vom Faserstrang
durch das
Werkzeug

106 — FEM-Berechnung
insbesondere der
Temperatur und
des Umsatzes im
Profil

107 — Zielwerte
erreicht?

nein

ja

108 — Maximale
Profilgeschwindigkeit erreicht?

nein

ja

109 — Werkzeugbau und
Vorgabe der
berechneten
Parameter als
Produktionsstartwerte

**Fig. 1**

**Europäisches Patentamt**
**European Patent Office**
**Office européen des brevets**

## EUROPÄISCHER RECHERCHENBERICHT

Nummer der Anmeldung

EP 19 17 1509

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 3 466 659 A1 (COVESTRO DEUTSCHLAND AG [DE]; KRAUSS MAFFEI TECH GMBH [DE]) 10. April 2019 (2019-04-10) * Absätze [0012] - [0024]; Abbildungen 1-2 * ----- | 1-7 | INV. B29C70/52 |
| A | EP 0 712 716 A1 (DANUBIA PETROCHEM POLYMERE [AT]) 22. Mai 1996 (1996-05-22) * Spalte 4, Zeile 5 - Spalte 6, Zeile 15; Abbildungen 1-2 * ----- | 1-7 | |

**RECHERCHIERTE SACHGEBIETE (IPC)**

B29C

Der vorliegende Recherchenbericht wurde für alle Patentansprüche erstellt

| Recherchenort | Abschlußdatum der Recherche | Prüfer |
|---|---|---|
| Den Haag | 31. Oktober 2019 | Makúch, Milan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 17 1509

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-10-2019

| Im Recherchenbericht angeführtes Patentdokument | Datum der Veröffentlichung | Mitglied(er) der Patentfamilie | Datum der Veröffentlichung |
|---|---|---|---|
| EP 3466659 A1 | 10-04-2019 | EP 3466659 A1<br>WO 2019068728 A1 | 10-04-2019<br>11-04-2019 |
| EP 0712716 A1 | 22-05-1996 | AT 403448 B<br>EP 0712716 A1<br>FI 955478 A | 25-02-1998<br>22-05-1996<br>16-05-1996 |

Für nähere Einzelheiten zu diesem Anhang : siehe Amtsblatt des Europäischen Patentamts, Nr.12/82